(19) Europäisches Patentamt
European Patent Office
Office européen des brevets

(11) EP 0 783 012 A1

(12) **EUROPEAN PATENT APPLICATION**

(43) Date of publication:
**09.07.1997 Bulletin 1997/28**

(51) Int. Cl.[6]: **C08G 65/26**, B01J 21/06

(21) Application number: **96120259.5**

(22) Date of filing: **17.12.1996**

(84) Designated Contracting States:
**DE FR GB**

(30) Priority: **22.12.1995 JP 334754/95**

(71) Applicant: **KAO CORPORATION**
**Chuo-ku, Tokyo (JP)**

(72) Inventors:
- **Tanaka, Toshihiro**
  **1334, Minato, Wakayama-shi, Wakayama (JP)**
- **Imanaka, Tatuhiro**
  **1334, Minato, Wakayama-shi, Wakayama (JP)**
- **Kawaguchi, Takahiro**
  **1334, Minato, Wakayama-shi, Wakayama (JP)**
- **Nagumo, Hiroshi**
  **1334, Minato, Wakayama-shi, Wakayama (JP)**

(74) Representative: **Hansen, Bernd, Dr. Dipl.-Chem. et al**
**Hoffmann, Eitle & Partner,**
**Patentanwälte,**
**Arabellastrasse 4**
**81925 München (DE)**

(54) **Process for producing ester alkoxylate compound and surfactant comprising ester alkoxylate compound**

(57) The present invention provides a process for producing an ester alkoxylate compound by adding an alkylene oxide to an ester compound, wherein a catalyst comprising one of an alkali metal or alkaline earth metal hydoxide, oxide, organic salts or alkolate and, as a co-catalyst, silica and/or a silica compound containing at least one element (except for N) which belongs to the Groups 1, 2, 4, 13 or 15 of the periodic table are used to produce an ester alkoxylate having a molar number distribution of added alkylene oxide in a narrow range and containing only a small amount of unreacted starting materials and by-products; and a surfactant produced by said process is also provided.

EP 0 783 012 A1

## Description

### Background of the Invention

The present invention relates to a process for producing an ester alkoxylate compound of a high quality by adding an alkylene oxide to an ester compound to directly incorporate the alkylene oxide into the ester bonds, and to a surfactant comprising the ester alkoxylate compound obtainable by this process and having a low unreacted ester content and a very narrow molar number distribution of added alkylene oxide.

It is known that ester alkoxylates compounds, i.e. alkoxylated esters of carboxylic acids, are used for surfactants and other application fields. The ester alkoxylate compounds are produced usually by a two-step reaction wherein a polyoxyalkylene alkyl ether is produced from an alcohol and an alkylene oxide and then the polyoxyalkylene alkyl ether is esterified with a carboxylic acid, since the addition polymerization reaction of the alkylene oxide does not proceed at all even when the alkylene oxide is applied for a reaction with a carboxylic acid ester in the presence of a conventional alkali catalyst or acid catalyst.

On the other hand, the following processes are known for producing an ester alkoxylate compound by reacting a carboxylic acid ester with an alkylene oxide in one step:

1) JP-B-53-24930 (DE-A-245416): a process for producing an ester alkoxylate compound from an alkylene oxide and an organic carboxylic acid ester in the presence of a catalyst comprising a halide or an organometallic compound of zinc, aluminum, titanium, tin or iron or a combination thereof with an amine compound,
2) JP-A-4-505449 (WO 90/13533): a process for alkoxylating an alkyl ($C_1$ to $C_4$) ester of a saturated or unsaturated fatty acid or a glyceride of a saturated or unsaturated fatty acid substituted with mono-hydroxyl group in the presence of sintered hydrotalcite as the catalyst,
3) JP-A-6-502139 (WO 92/07795): hydrophobised double-layer hydroxide compounds produced by a reaction of double-layer hydroxide compounds with mono- and/or dicarboxylic acids in an organic solvent or in a kneader; and the use of the compounds as alkoxylation catalysts for carboxylic acid esters,
4) JP-B-6-88944 (US-A-5374750): a process for producing an ester alkoxylate from an alkyl ester of a fatty acid and an alkylene oxide in the presence of a magnesium oxide catalyst containing at least one metal ion selected from among trivalent Aℓ, Ga, In, Tℓ, Co, Sc and La ions and a divalent Mn ion, and
5) JP-A-2-149541 (EP-A-335295): a process for using hydroxide, oxide or alcoholate of an alkali metal or alkaline earth metal as the catalyst for the reaction of a carboxylic acid ester with an alkylene oxide.

However, in the above process 1) wherein the catalyst is dissolved in the reaction system to accelerate the reaction, the separation of the intended product and the catalyst is industrially difficult.

Although a high yield of the intended product can be obtained in the above processes 2) to 5), the molar number distribution of the added alkylene oxide in the product is not always in a narrow range and these processes have the problem that an unreacted carboxylic acid ester is contained in a large amount in the product.

### Summary of the Invention

The object of the present invention is to provide a process for producing an ester alkoxylate compound having a narrow molar number distribution of added alkylene oxide and low content of unreacted raw materials and by-products in high reaction rate and high yield, such an ester alkoxylate compound has not been obtainable with use of the conventional catalysts.

Another object of the present invention is to provide a surfactant obtainable by the above process.

The present inventors have investigated catalyts thereby an ester alkoxylate compound having a narrow molar number distribution of added alkylene oxide and low content of unreacted raw materials and by-products can be obtained. As a result of such intensive investigation, the inventors have found that the above problem can be solved by using specified catalyst. The present invention has been completed on the basis of this finding.

### Detailed description of the Invention

The present invention relates to a process for producing an ester alkoxylate compound having at least one group represented by the formula (II) by adding an alkylene oxide having 2 to 4 carbon atoms to an ester compound having at least one group represented by the formula (I), characterized by using, as a catalyst for the alkylene oxide addition reaction, an alkali metal compound or an alkaline earth metal compound selected from the group consisting of hydroxides, oxides, organic acid salts and alcoholates thereof, and, as a co-catalyst, silica and/or a silica compound containing at least one element (except for N) which belongs to the Groups 1, 2, 4, 13 or 15 of the periodic table:

$$-COOR \qquad (I)$$

$$-COO(AO)_mR \qquad (II)$$

wherein R represents a residue of an alcohol or phenol compound, A represents an alkylene group having 2 to 4 carbon atoms, m represents an average molar number of added alkylene oxide, and m A's may be the same or different from each other.

R is not specifically limited as far as it is a residue obtained by removing one hydroxyl group from an alcohol or phenol compound being able to form ester bonds with a carboxylic acid. An alkyl group, alkenyl group, alkyl group having a structure of ester, ether, ketal or acetal in the chain and glyceryl group are exemplified as the R, those groups preferably having 1 to 21 carbon atoms.

Further, the present invention provides a surfactant comprising an ester alkoxylate compound represented by the formula (IX):

$$E^1-\overset{\overset{\displaystyle O}{\|}}{C}-O-(AO)n_{av}-G^1 \qquad (IX)$$

wherein $E^1$and $G^1$ may be the same or different from each other each represents a linear or branched alkyl or alkenyl group having 1 to 21 carbon atoms; A is as defined above; and $n_{av}$ represents an average molar number of added alkylene oxide in the range of 3 to 15,
characterized in that the molar number distribution of added alkylene oxide satisfies the formula (X):

$$\sum_{i=n_{max}-2}^{i=n_{max}+2} Yi \geqq 70\% \text{ by weight} \qquad (X)$$

wherein $n_{max}$ represents the maximum molar number of added alkylene oxide and Yi represents a relative amount (% by weight) of the ester alkoxylate compound having a molar number of added ethylene oxide of i.

The term "periodic table" herein refers to the one given in "Kgaku Binran (Handbook of Chemistry)", the fourth revision, Fundamentals II (edited by the Chemical Society of Japan and published by Maruzen Co., Ltd. on September 30, 1993), based on the proposal by IUPAC (1990).

A detailed description will be given below on the mode for carrying out the invention.

[Catalyst]

The catalyst used in the present invention comprises an alkali metal compound or an alkaline earth metal compound selected from the group consisting of hydroxides, oxides, organic acid salts and alcoholates of an alkali metal or alkaline earth metal, and, as a co-catalyst, silica and/or a silica compound containing at least one element (except for N) which belongs to the Groups 1, 2, 4, 13 or 15 of the periodic table.

The alkali metal compounds used in the present invention include carboxylic acid salts of alkali metals such as Na and K, preferably those having 1 to 22 carbon atoms and still preferably those having 8 to 18 carbon atoms (for example, sodium laurate, potassium laurate, sodium stearate and potassium stearate), ether carboxylates, alkali metal alcoholates (for example, sodium methylate, sodium ethylate, potassium methylate and potassium ethylate), and alkali metal hydroxides (for example, sodium hydroxide and potassium hydroxide).

The alkaline earth metal compounds used in the present invention include carboxylic acid salts of alkaline earth metals such as Mg, Ca and Ba, preferably those having 1 to 22 carbon atoms and still preferably those having 8 to 18 carbon atoms (for example, barium laurate, calcium laurate, magnesium laurate and barium stearate), ether carboxylates, alkaline earth metal alcoholates (for example, barium methylate, calcium methylate, and magnesium methylate), alkaline earth metal hydroxides (for example, barium hydroxide, calcium hydroxide and magnesium hydroxide), and alkaline earth metal oxides.

In the alkali metal compounds and alkaline earth metal compounds, alkali metal or alkaline earth metal carboxylates and alkaline earth metal oxides are preferred, and barium compounds such as barium laurate and barium oxide are particularly preferred in view of utility.

The co-catalysts used in the present invention are silica itself ($SiO_2$), silica compounds containing silica as the main component, or mixture thereof, and also including silica-containing synthetic adsorbents and porous substances such as zeolite broadly used on an industrial scale.

The elements of the Group 1 of the periodic table contained in the silica compounds of the present invention include, for example, Li, Na and K, those of the Group 2 include Mg, Ca, Sr and Ba, those of the Group 4 include Ti and Zr, those of the Group 13 include Aℓ, and those of the Group 15 include P. Among them, Mg and Aℓ are practically preferred.

The simplest silica compounds include those mainly comprising silica such as silica powder and silica gel. They include, for example, those of Mizukasil® series (products of Mizusawa Industrial Chemicals Ltd.).

Examples of the synthetic adsorbents containing silica include those containing Mg, Aℓ and Si as the main components, having properties of a solid base or solid acid and having acid/alkali-adsorbing function depending on the combination of said components. Particular examples of them include those of KYOWAAD® series (products of Kyowa Chemical Industry Co., Ltd.). Among them, $MgO\text{-}SiO_2$ [for example, KYOWAAD® 600, KYOWAAD® 600S ($2MgO \cdot 6SiO_2 \cdot xH_2O$) (x being the quantity of water of crystallization)] and $A\ell_2O_3\text{-}SiO_2$ [such as KYOWAAD® 700; $A\ell_2O_3 \cdot 9SiO_2 \cdot xH_2O$ (x being the quantity of water of crystallization)] are particularly preferred.

Zeolite used in the present invention includes natural zeolites obtained as a mineral from natural mines and comprises $SiO_2$, $A\ell_2O_3$, $Fe_2O_3$, MgO, CaO, $P_2O_5$, $Na_2O$, $K_2O$, etc. Synthetic zeolites such as A, X and Y are also included. As for the chemical structure, zeolite is a crystalline alkali metal or alkaline earth metal aluminosilicate generally represented by the formula:

$$MeO \cdot A\ell_2O_3 \cdot mSiO_2 \cdot nH_2O \qquad \text{(Me: metal ion)}$$

The main components of typical synthetic zeolites are Na, Aℓ and Si. Typical examples of the synthetic zeolites include synthetic zeolite adsorbents of Zeolum® series (products of Tosoh Corporation).

The synthetic zeolites include also titano-silicates containing titanium in place of aluminum.

In the present invention, diatomaceous earth, mordenite, montmorillonite, etc. can also be used as silica compounds.

Although hydrous silica compounds may be used, preferably used are those dehydrated by firing.

[Process for producing ester alkoxylate compound]

The ester compounds having at least one group of the above formula (I) and usable as the starting material for the ester alkoxylate compounds of the present invention may be monoesters, diesters, triesters and those having more ester groups in the molecule. Preferred examples include those of the following formulae (III), (IV) and (V):

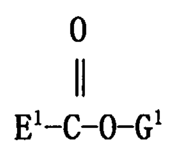

(III)

wherein $E^1$ and $G^1$ may be the same or different from each other and each represents a linear or branched alkyl or alkenyl group having 1 to 21 carbon atoms,

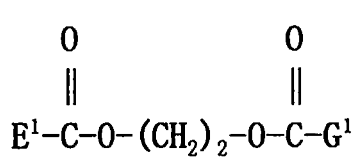

(IV)

wherein $E^1$ and $G^1$ are as defined above,

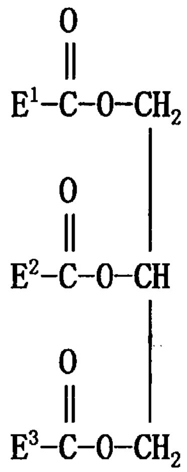 (V)

wherein $E^1$ is as defined above, and $E^2$ and $E^3$ may be the same or different from each other and each represents a linear or branched alkyl or alkenyl group having 1 to 21 carbon atoms.

The ester compounds of the formula (III) include, for example, methyl esters and ethyl esters of caproic acid, caprylic acid, capric acid, lauric acid, myristic acid, palmitic acid, stearic acid, oleic acid, coconut oil fatty acids, palm oil fatty acids, palm kernel oil fatty acids, beef tallow fatty acids and hydrogenated fatty acids corresponding thereto.

The ester compounds of the formula (IV) include, for example, ethylene glycol dicaproate, dicaprylate, dicaprate, dilaurate, dimyristate, dipalmitate, distearate and dioleate; ethylene glycol diesters of coconut oil fatty acids, palm oil fatty acids, palm kernel oil fatty acids and beef tallow fatty acids; and ethylene glycol di-esters of hydrogenated fatty acids obtained by hydrogenating the fatty acids derived from the above-described natural oils and fats.

The ester compounds of the formula (V) include, for example, triglycerides of fatty acids such as caproic acid, caprylic acid, capric acid, lauric acid, myristic acid, palmitic acid, stearic acid, oleic acid and 2-ethylhexanoic acid; coconut oil, palm oil, palm kernel oil, beef tallow, lard and hardened oils obtained by hardening these natural oils and fats.

In the present invention, an alkylene oxide is added to the ester compound represented by the formula (III), (IV) or (V) to alkoxylate the compound, thereby forming a corresponding ester alkoxylate compound represented by the formula (VI), (VII) or (VIII):

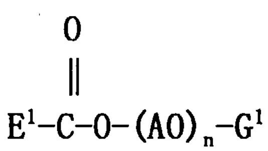 (VI)

wherein $E^1$ and $G^1$ are each as defined above, A is as defined above, and n A's may be the same or different from each other, and n represents a number of 1 to 50 indicating the average molar number of added alkylene oxide.

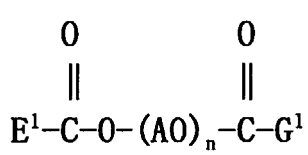 (VII)

wherein $E^1$, $G^1$, A and n are each as defined above.

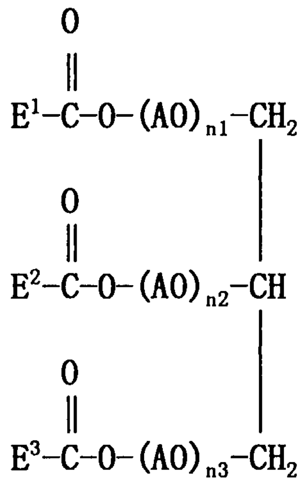

(VIII)

wherein $E^1$, $E^2$ and $E^3$ are each as defined above, A is as defined above and ($n^1$+$n^2$+$n^3$) A's may be the same or different from each other, $n^1$, $n^2$ and $n^3$ may be the same or different from each other and each represent a number of 0 to 50 indicating the average molar number of added alkylene oxide, and $0<n^1+n^2+n^3<50$ .

Although the alkylene oxide used in the present invention is not particularly limited so far as it reacts with the ester compound to form the ester alkoxylate compound, it is preferably ethylene oxide, propylene oxide or a mixture of them.

A preferred example of the process of the present invention comprises reacting an ester compound with an alkylene oxide in the presence of 0.01 to 10% by weight, preferably 0.1 to 2% by weight based on the ester compound, of the alkali metal compound or alkaline earth metal compound, and 0.01 to 10% by weight, preferably 0.1 to 5% by weight based on the ester compound, of the above-described co-catalyst at a temperature of 80 to 230°C, preferably 120 to 180°C in a reactor such as an autoclave. When the reaction temperature is 80°C or above, a sufficient reaction rate is obtained, and at a temperature of 230°C or below, decomposition of the starting materials and the product hardly occur.

The catalyst and the co-catalyst of the present invention may be fed separately into the reaction system or by previous mixing. On the other hand, in the present invention, the catalyst and the co-catalyst may be prepared by supporting the alkali metal compound or alkaline earth metal compound on the silica compound or silica.

Although the reaction mixture obtained by the above-described process is usable as it is depending on the use, the catalyst suspended in the reaction product is usually removed by filtration, centrifugation or the like to obtain the final product.

In the present invention, the catalyst and the co-catalyst separated by the filtration, centrifugation or the like can be recovered and reused for further production of the ester alkoxylate compound. The recovered catalyst is preferably washed with a solvent such as acetone before the use.

There are some merits in using the recovered catalyst: the use thereof is economically advantageous, the range of the molar number distribution of added ethylene oxide in the obtained ester alkoxyrate compound becomes narrow and the unreacted ester compound content of the product becomes low.

[Surfactant comprising ester alkoxylate compound]

By the above-described process of the present invention, it is possible to obtain novel surfactants comprising the ester alkoxylate compound of the above formula (IX), which satisfy the above-described formula (X) of the molar number distribution of added alkylene oxide. Those products are reduced in unreacted ester compound content and have a molar number distribution of added ethylene oxide in a very narrow range.

The ester alkoxylate compounds obtained by the process of the present invention and having a molar number distribution of added ethylene oxide in a very narrow range are superior to the ester alkoxylate compounds synthesized in the presence of an ordinary catalyst and having a broad distribution in the smell and quality, since the unreacted starting ester content of the former is low.

Further, the surfactants have improved solubility in water and penetrability due to the less amount of the components having small molar number of added alkylene oxide.

In addition, methyl ester alkoxylate compounds are excellent in safety, since they are reduced in the amounts of methanol and the low-molar alkylene oxide adduct of methanol formed by partial hydrolysis.

On the other hand, higher molar adduct of the alkylene oxide is reduced in the amount, the melting point is low and the solid properties are improved. Another advantage is that since the molar number distribution of added alkylene oxide is in the narrow range, the active ingredient of the surfactant is increased in amount to make it possible to obtain excellent washing properties and compositions variable over a wide range.

Thus, the surfactants of the present invention, having extremely excellent lathering properties and odor, being biodegradable and friendly to the environment, are effectively usable as a detergent or the like.

Brief Description of the Drawings:

Fig. 1 shows the molar number distribution of added ethylene oxide in the product of each of Examples 1 to 3.
Fig. 2 shows the molar number distribution of added ethylene oxide in the product of each of Examples 4 and 5.
Fig. 3 shows the molar number distribution of added ethylene oxide in the product of each of Examples 6 and 7.
Fig. 4 shows the molar number distribution of added ethylene oxide in the product of each of Examples 8 and 9.
Fig. 5 shows the molar number distribution of added ethylene oxide in the product of Example 10.
Fig. 6 shows the molar number distribution of added ethylene oxide in the product of Example 11.
Fig. 7 shows the molar number distribution of added ethylene oxide in the product of Comparative Example 1.

Examples

The following Examples will further illustrate the present invention, which by no means limit the invention. In the Examples, percentages are given by weight unless otherwise noted.

Example 1

300 g (1.4 mol) of methyl laurate, and as the catalyst, 1.27 g (0.424% by weight based on methyl laurate) of barium oxide and 11.17 g (3.72% by weight based on methyl laurate) of $MgO\text{-}SiO_2$ (KYOWAAD® 600S; a product of Kyowa Chemical Industry Co., Ltd.) previously dehydrated by firing at 600°C for 2 h were fed into a 3.5-ℓ autoclave. The temperature was elevated to 110°C under reduced pressure of 500 Torr and the reduced-pressure treatment was conducted under these conditions for 1 h. Then nitrogen was introduced into the autoclave to a pressure of 0.2 $kg/cm^2G$. The temperature was elevated to 165°C. Thereafter, 370 g (8.4 mol) of ethylene oxide was fed thereinto at that temperature while the pressure was kept at 3 to 5 $kg/cm^2G$ to conduct the reaction.

After aging at that temperature for 1 to 3 h, the reaction mixture was cooled to 80°C. Unreacted ethylene oxide was removed by the reduced pressure treatment at 500 Torr. The catalyst was removed by filtration through Toyo Filter Paper No. 2 with a pressure filter having an inner diameter of 12.5 cm at a nitrogen pressure of 3 $kg/cm^2G$.

The ethylene oxide addition reaction rate was determined by a method which will be described below, and the relative amount of unreacted methyl laurate in the reaction product and the molar number distribution of added ethylene oxide were determined by gas chromatography. The ethylene oxide addition reaction rate, the relative amount of unreacted methyl laurate and the value calculated by the formula (XI) are summarized in Table 1. Further, the molar number distribution of added ethylene oxide is shown in Fig. 1.

$$\sum_{i=n_{max}-2}^{i=n_{max}+2} Yi \qquad \text{(XI)}$$

wherein $n_{max}$ and Yi are as defined above.

⟨Method for determination of ethylene oxide addition reaction rate⟩

Ethylene oxide was fed into the autoclave until the pressure reached 3 $kg/cm^2$ (the base). Ethylene oxide was further added thereto to a pressure of 5 $kg/cm^2$ and the amount (weight) of ethylene oxide fed in this step was determined. Then the reaction was conducted until the pressure lowered to 3 $kg/cm^2$ and the time taken in this step was measured. This operation was repeated to add an intended amount of ethylene oxide. The amount (mol) of ethylene oxide reacted per hour was calculated from the amount of the fed ethylene oxide and the reaction time.

Example 2

The reaction was conducted in the same manner as that of Example 1 except that 12 g (4% by weight based on methyl laurate) of the catalyst and the co-catalyst recovered by filtration in Example 1 was used.

The ethylene oxide addition reaction rate, the relative amount of unreacted methyl laurate and the value calculated by the above formula (XI) are summarized in Table 1. The molar number distribution of added ethylene oxide is shown in Fig. 1.

Example 3

The reaction was conducted in the same manner as that of Example 1 except that 12 g (4% by weight based on methyl laurate) of barium oxide and 24 g of $MgO\text{-}SiO_2$ were used as the catalyst/co-catalyst. The catalyst with the co-catalyst was recovered by filtration and 30 g of the recovered catalyst/co-catalyst was dispersed in 270 g of acetone. After stirring at room temperature for 1 h for washing, the acetone-washed catalyst was recovered by filtration.

The reaction was conducted in the same manner as that of Example 1 except that 12.0 g (4% by weight based on methyl laurate) of the acetone-washed catalyst was used.

The ethylene oxide addition reaction rate the relative amount of unreacted methyl laurate and the value calculated by the above formula (XI) are summarized in Table 1. The molar number distribution of added ethylene oxide is shown in Fig. 1.

Example 4

The reaction was conducted in the same manner as that of Example 1 except that 4.45 g (1.48% by weight based on methyl laurate) of barium laurate and 11.17 g of $MgO\text{-}SiO_2$ were used as the catalyst/co-catalyst system which was recovered by filtration.

The ethylene oxide addition reaction rate, the relative amount of unreacted methyl laurate and the value calculated by the above formula (XI) are summarized in Table 1. The molar number distribution of added ethylene oxide is shown in Fig. 2.

Example 5

The reaction was conducted in the same manner as that of Example 1 except that 12 g (4% by weight based on methyl laurate) of the catalyst recovered in Example 4 was used.

The ethylene oxide addition reaction rate, the relative amount of unreacted methyl laurate and the value calculated by the above formula (XI) are summarized in Table 1. The molar number distribution of added ethylene oxide is shown in Fig. 2.

Example 6

The reaction was conducted in the same manner as that of Example 1 except that 4.45 g (1.48% by weight based on methyl laurate) of barium laurate and 11.17 g of $A\ell_2O_3\text{-}SiO_2$ (KYOWAAD® 700; a product of Kyowa Chemical Industry Co., Ltd.) were used as the catalyst. The catalyst was recovered by filtration in the same manner as that of Example 1.

The ethylene oxide addition reaction rate, the relative amount of unreacted methyl laurate and the value calculated by the formula (XI) are summarized in Table 1. The molar number distribution of added ethylene oxide is shown in Fig. 3.

Example 7

The reaction was conducted in the same manner as that of Example 1 except that 12 g (4% by weight based on methyl laurate) of the catalyst recovered in Example 6 was used.

The ethylene oxide addition reaction rate, the relative amount of unreacted methyl laurate and the value calculated by the formula (XI) are summarized in Table 1. The molar number distribution of added ethylene oxide is shown in Fig. 3.

Example 8

The reaction was conducted in the same manner as that of Example 1 except that 4.45 g (1.48% by weight based on methyl laurate) of barium laurate and 11.17 g of $SiO_2$ (silica, trade name: Mizukasil P-78A; a product of Mizusawa Industrial Chemicals Ltd.) were used as the catalyst. The catalyst was recovered by filtration in the same manner as that of Example 1.

The ethylene oxide addition reaction rate, the relative amount of unreacted methyl laurate and the value calculated by the formula (XI) are summarized in Table 1. The molar number distribution of added ethylene oxide is shown in Fig. 4.

Example 9

The reaction was conducted in the same manner as that of Example 1 except that 12 g (4% by weight based on methyl laurate) of the catalyst recovered in Example 8 was used.

The ethylene oxide addition reaction rate, the relative amount of unreacted methyl laurate and the value calculated by the formula (XI) are summarized in Table 1. The molar number distribution of added ethylene oxide is shown in Fig. 4.

Example 10

Preparation of catalyst

300 g (1.4 mol) of methyl laurate, 13.35 g (0.025 mol) of barium laurate and 33.51 g of $A\ell_2O_3$-$SiO_2$ (KYOWAAD® 700; a product of Kyowa Chemical Industry Co., Ltd.) were fed into a 1-ℓ four-necked flask and then stirred at 165°C in a nitrogen atmosphere for 1 h. The obtained mixture was cooled to 80°C and filtered to obtain 80.36 g of a cake.

The cake was dispersed in 300 g of acetone and the dispersion was stirred at room temperature for 1 h and then filtered. After drying at 80°C under reduced pressure, 46.2 g of $A\ell_2O_3$-$SiO_2$ catalyst supporting 28.5% of barium laurate thereon obtained. Yield: 99%.

Ethylene oxide addition reaction

The reaction was conducted in the same manner as that of Example 1 except that 12.0 g (4% by weight based on methyl laurate) of the catalyst obtained as described above was used.

The ethylene oxide addition reaction rate, the relative amount of unreacted methyl laurate and the value calculated by the formula (XI) are summarized in Table 1. The molar number distribution of added ethylene oxide is shown in Fig. 5.

Example 11

Synthesis of glycerol ketal fatty acid ester

321.5 g (1.5 mol) of methyl laurate, 594 g (4.5 mol) of 2,2-dimethyl-1,3-dioxolane-4-methanol (general name: solketal) and 18.3 g (2% by weight) of 28% solution of sodium methylate in methanol were fed into a 2-ℓ four-necked flask equipped with a stirrer, a thermometer, a nitrogen inlet tube and a dehydration condenser. The temperature was elevated to 170°C and transesterification reaction was conducted for 5 hours while methanol thus formed was removed. The conversion was 97%.

The reaction solution was cooled to 80°C, and 36.6 g (4% by weight) of KYOWAAD® 600 S (a product of Kyowa Chemical Industry Co., Ltd.) was added thereto. After the treatment for 1 hour followed by the removal of the catalyst by filtration, the reaction mixture was distilled at 170 to 185°C under reduced pressure of 3 Torr to obtain 339.0 g of the intended glycerol ketal fatty acid ester. Yield: 72%. Purity determined by gas chromatography: 94%.

Ethylene oxide addition reaction

The reaction was conducted in the same manner as that of Example 1 except that 300.0 g (0.95 mol) of the glycerol ketal fatty acid ester obtained as described above and the catalyst obtained in Example 10 were used.

The ethylene oxide addition reaction rate, the relative amount of unreacted methyl laurate and the value calculated by the formula (XI) are summarized in Table 1. The molar number distribution of added ethylene oxide is shown in Fig. 6.

Hydrolysis reaction

166.5 g (0.29 mol) of the EO (6 mol) adduct of the glycerol ketal fatty acid ester obtained as described above, 791 g of ethanol, 375 g of ion-exchanged water and 0.83 g of hydrochloric acid were fed into a 2-ℓ four-necked flask, and the hydrolysis reaction was conducted under stirring at 80°C for 1 h. The pH of the reaction mixture was adjusted to 7 with a N/2 aqueous KOH solution. After concentration with an evaporator, the EO adduct of the glycerol fatty acid ester corresponding to the hydroxylation product of the above-described compound was obtained. Yield: 100%.

Comparative Example 1

The reaction was conducted in the same manner as that of Example 1 except that 6.0 g (2% by weight based on methyl laurate) of barium oxide was used as the catalyst.

The ethylene oxide addition reaction rate, the relative amount of unreacted methyl laurate and the value calculated

by the formula (XI) are summarized in Table 1. The molar number distribution of added ethylene oxide is shown in Fig. 7.

Table 1

| | Catalyst | EO addition reaction rate (EOmol/Hr) | Unreacted methyl laurate (wt. %) | $\sum_{i=n_{max}-2}^{i=n_{max}+2} Yi$ (wt.%) |
|---|---|---|---|---|
| Ex. 1 | BaO, $MgO-SiO_2$ | 2.32 | 2.3 | 75.6 |
| Ex. 2 | Recovered catalyst in Ex. 1 | 1.17 | 0.1> | 84.6 |
| Ex. 3 | Catalyst recovered and washed with acetone | 1.10 | 0.1> | 85.4 |
| Ex. 4 | Ba laurate $MgO-SiO_2$ | 1.31 | 3.7 | 74.4 |
| Ex. 5 | Recovered catalyst in Ex. 4 | 0.74 | 0.4 | 83.9 |
| Ex. 6 | Ba laurate $A\ell_2O_3-SiO_2$ | 2.57 | 0.23 | 89.7 |

Table 1 (continued)

| | Catalyst | EO addition reaction rate (EOmol/Hr) | Unreacted methyl laurate (wt. %) | $\sum_{i=n_{max-2}}^{i=n_{max+2}} Y_i$ (wt.%) |
|---|---|---|---|---|
| Ex. 7 | Recovered catalyst in Ex. 6 | 1.42 | 1.29 | 82.5 |
| Ex. 8 | Ba laurate $SiO_2$ | 4.47 | 4.2 | 70.3 |
| Ex. 9 | Recovered catalyst in Ex. 8 | 4.93 | 4.2 | 70.2 |
| Ex. 10 | $Al_2O_3$-$SiO_2$ catalyst supporting Ba laurate | 2.47 | 0.30 | 88.2 |
| Ex. 11 | $Al_2O_3$-$SiO_2$ catalyst supporting Ba laurate | 2.54 | 0.13 | 89.7 |
| Comp. Ex. 1 | BaO alone | 2.66 | 4.2 | 64.1 |

It is apparent from Table 1 and Figs. 1 to 7 that the ester ethoxylate compounds obtained in Examples 1 to 11 contained only a reduced amount of unreacted methyl laurate and had a very narrow molar number distribution of added ethylene oxide, whereas the ester ethoxylate compound in Comparative Example 1 contained unreacted methyl laurate in an amount larger than that in the Examples and had a broad molar number distribution of added ethylene oxide.

Example 12

The reaction was conducted in the presence of the same catalyst as that of Example 1 in the same manner as that of Example 1 except that methyl laurate was replaced with 300 g (0.343 mol) of soybean oil to add 76 g (1.714 mol) of ethylene oxide.

The ethylene oxide addition reaction rate determined in the same manner as that of Example 1 was 1.36 EO mol/hr.

Test Example

The smell of the ester ethoxylate compounds obtained in Examples 1 to 7 and Comparative Example 1 and the penetrability thereof into a felt were examined by the following methods to obtain the results given in Table 2.

〈Smell evaluation method 〉

The smell was evaluated according to the following criteria by 10 panelists:

○: scarcely any smell
△: slight smell, and
X: strong smell.

〈Test of penetrability into felt 〉

A piece of felt (2 cm × 2 cm) was floated on a 0.02% aqueous ester ethoxylate solution (20°C, 4°DH) to examine whether it sank or not. The results were evaluated according to the following criteria. When the felt sank, the penetrability of the ester ethoxylate compound was judged to be high.

○: The felt sank.
△: The felt did not sink.

Table 2

| | Result of smell evaluation | Result of felt penetration test |
|---|---|---|
| Ex. 1 | △ | ○ |
| Ex. 2 | ○ | ○ |
| Ex. 3 | ○ | ○ |
| Ex. 4 | △ | ○ |
| Ex. 5 | ○ | ○ |
| Ex. 6 | ○ | ○ |
| Ex. 7 | ○ | ○ |
| Comp. Ex. 1 | X | X |

According to the present invention, the alkoxylation of esters in one step is possible, though it has been difficult heretofore, and ester alkoxylate compounds having a molar number distribution of addition in a narrow range and a reduced unreacted starting material content in the reaction product can be produced. The surfactants comprising the ester alkoxylate compounds thus obtained have extremely excellent lathering properties and smell and are also biodegradable and friendly to the environment, thus being effectively usable as detergent or the like.

**Claims**

**1.** A process for producing an ester alkoxylate compound having at least one group represented by the formula (II) by

adding an alkylene oxide having 2 to 4 carbon atoms to an ester compound having at least one group represented by the formula (I), characterized by using, as a catalyst for the alkylene oxide addition reaction, an alkali metal compound or an alkaline earth metal compound selected from the group consisting of hydroxides, oxides, organic acid salts and alcoholates thereof, and, as a co-catalyst, silica and/or a silica compound containing at least one element (except for N) which belongs to the Groups 1, 2, 4, 13 or 15 of the periodic table:

$$-COOR \quad (I)$$

$$-COO(AO)_mR \quad (II)$$

wherein R represents a residue of an alcohol or phenol compound, A represents an alkylene group having 2 to 4 carbon atoms, m represents an average molar number of added alkylene oxide, and m A's may be the same or different from each other.

**2.** The process as claimed in claim 1, wherein the alkali metal compound is an alkali metal carboxylate, alcoholate or hydroxide.

**3.** The process as claimed in claim 1, wherein the alkaline earth metal compound is an alkaline earth metal carboxylate, alcoholate, hydroxide or oxide.

**4.** The process as claimed in any one of the claims 1 to 3, wherein the co-catalyst is silica and/or a silica compound selected from the group consisting of $MgO-SiO_2$, $A\ell_2O_3-SiO_2$, zeolite, diatomaceous earth, mordenite and montmorillonite.

**5.** The process as claimed in any one of the claims 1 to 4, wherein the amount of the alkali metal compound or the alkaline earth metal compound is in the range from 0.01 to 10% by weight based on the ester compound.

**6.** The process as claimed in any one of the claims 1 to 5, wherein the amount of the co-catalyst is in the range from 0.01 to 10% by weight based on the ester compound.

**7.** The process as claimed in any one of the claims 1 to 6, wherein the silica compound contains at least one element selected from the group consisting of Na, K, Mg, Ca, Ti, Zr, Aℓ and P.

**8.** The process as claimed in any one of the claims 1 to 7, wherein the catalyst and the co-catalyst are those which have been used in a process for producing the ester alkoxylate compound and recovered.

**9.** The process as claimed in any one of the claims 1 to 8, wherein the ester compound having at least one group represented by the formula (I) is a mono-ester, di-ester or tri-ester compound.

**10.** The process as claimed in any one of the claims 1 to 9, wherein the ester compound having at least one group represented by the formula (I) is a compound represented by the formula (III), (IV) or (V):

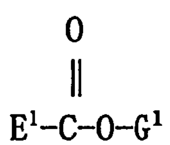

(III)

wherein $E^1$ and $G^1$ may be the same or different from each other and each represents a linear or branched alkyl or alkenyl group having 1 to 21 carbon atoms

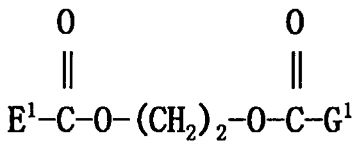

(IV)

wherein $E^1$ and $G^1$ are each as defined above, and

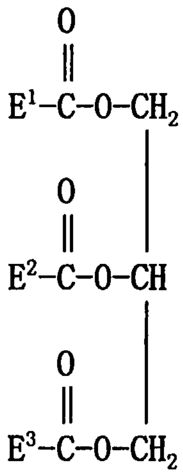

(V)

wherein $E^1$ is as defined above, and $E^2$ and $E^3$ may be the same or different from each other and each represents a linear or branched alkyl or alkenyl group having 1 to 21 carbon atoms.

**11.** A surfactant comprising an ester alkoxylate compound represented by the formula (IX):

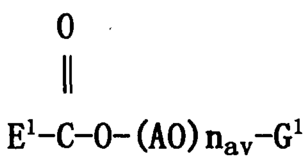

(IX)

wherein $E^1$, $G^1$ and A are each as defined above, and $n_{av}$ represents an average molar number of added alkylene oxide in the range of 3 to 15, characterized in that the molar number distribution of added alkylene oxide satisfies the formula (X):

$$\sum_{i=n_{max}-2}^{i=n_{max}+2} Y\,i \geqq 70\% \text{ by weight} \qquad (X)$$

wherein $n_{max}$ represents the maximum molar number of added alkylene oxide and Yi represents a relative amount (% by weight) of the ester alkoxylate compound having a molar number of added ethylene oxide of i.

**12.** The surfactant as claimed in claim 11, which is obtainable by the process set forth in claim 1.

Fig.1

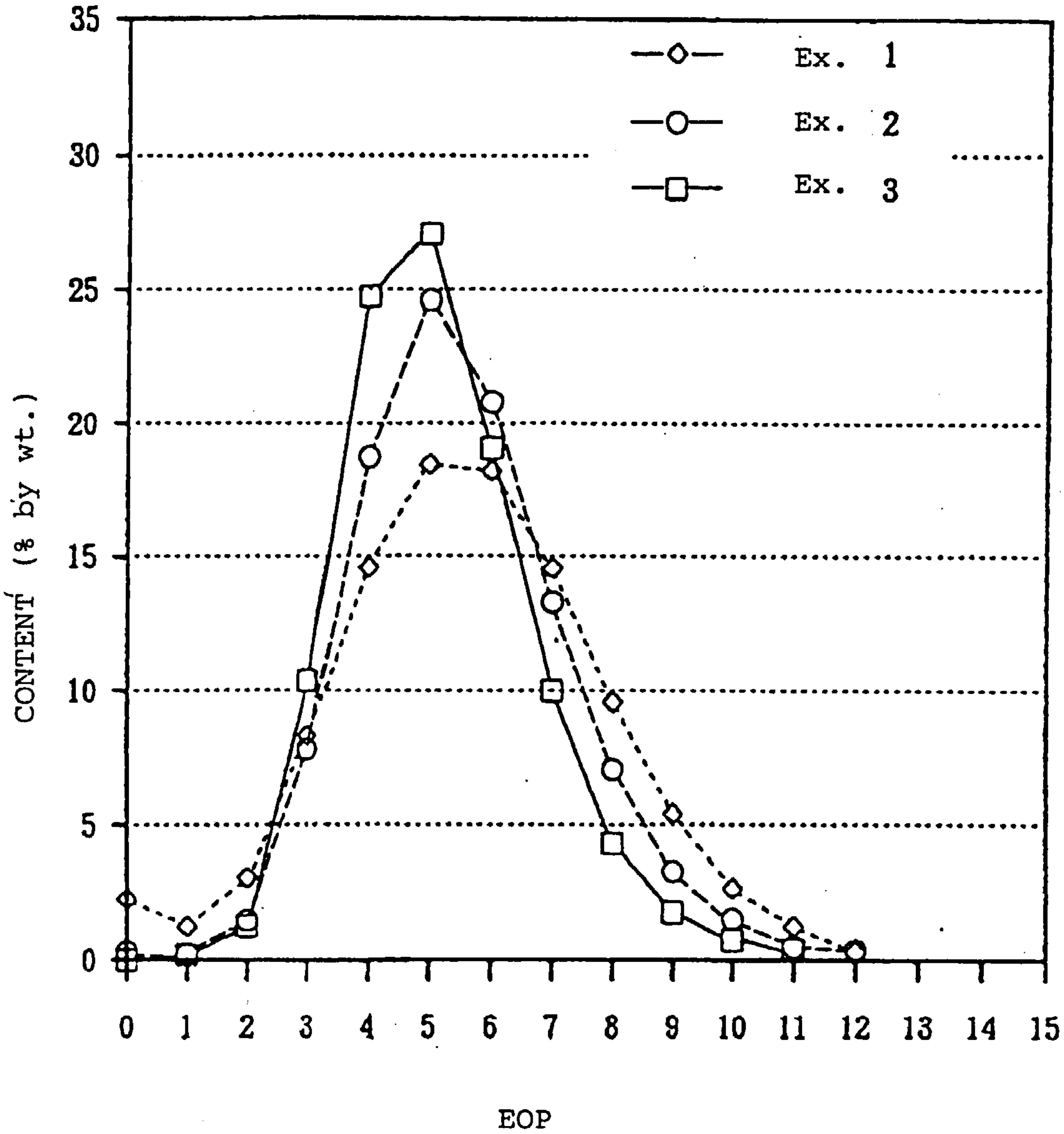
35
30
25
20
15
10
5
0
CONTENT (% by wt.)
Ex. 1
Ex. 2
Ex. 3
0 1 2 3 4 5 6 7 8 9 10 11 12 13 14 15
EOP

Fig. 2

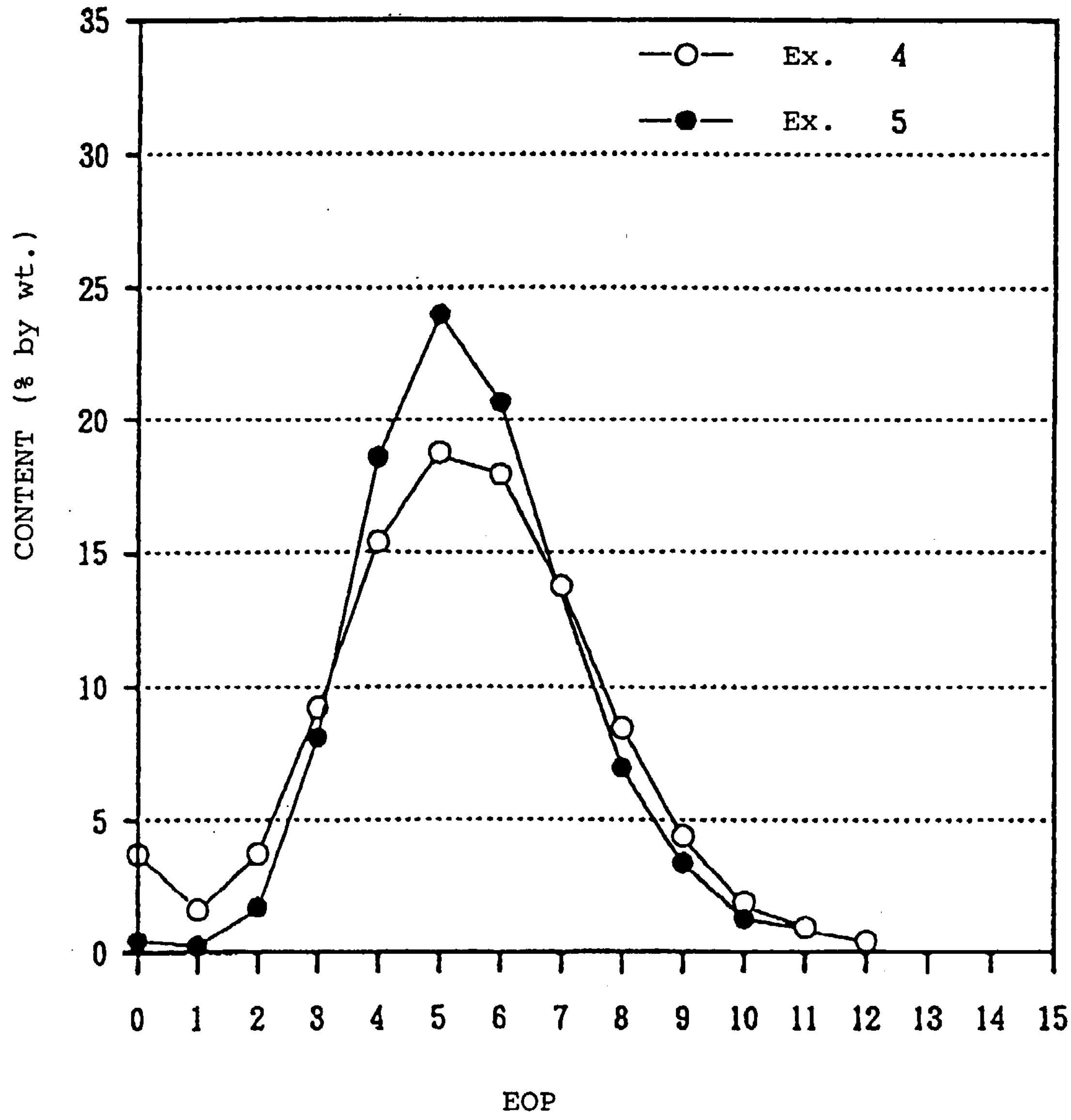
Ex. 4
Ex. 5
CONTENT (% by wt.)
35
30
25
20
15
10
5
0
0
1
2
3
4
5
6
7
8
9
10
11
12
13
14
15
EOP

Fig. 3

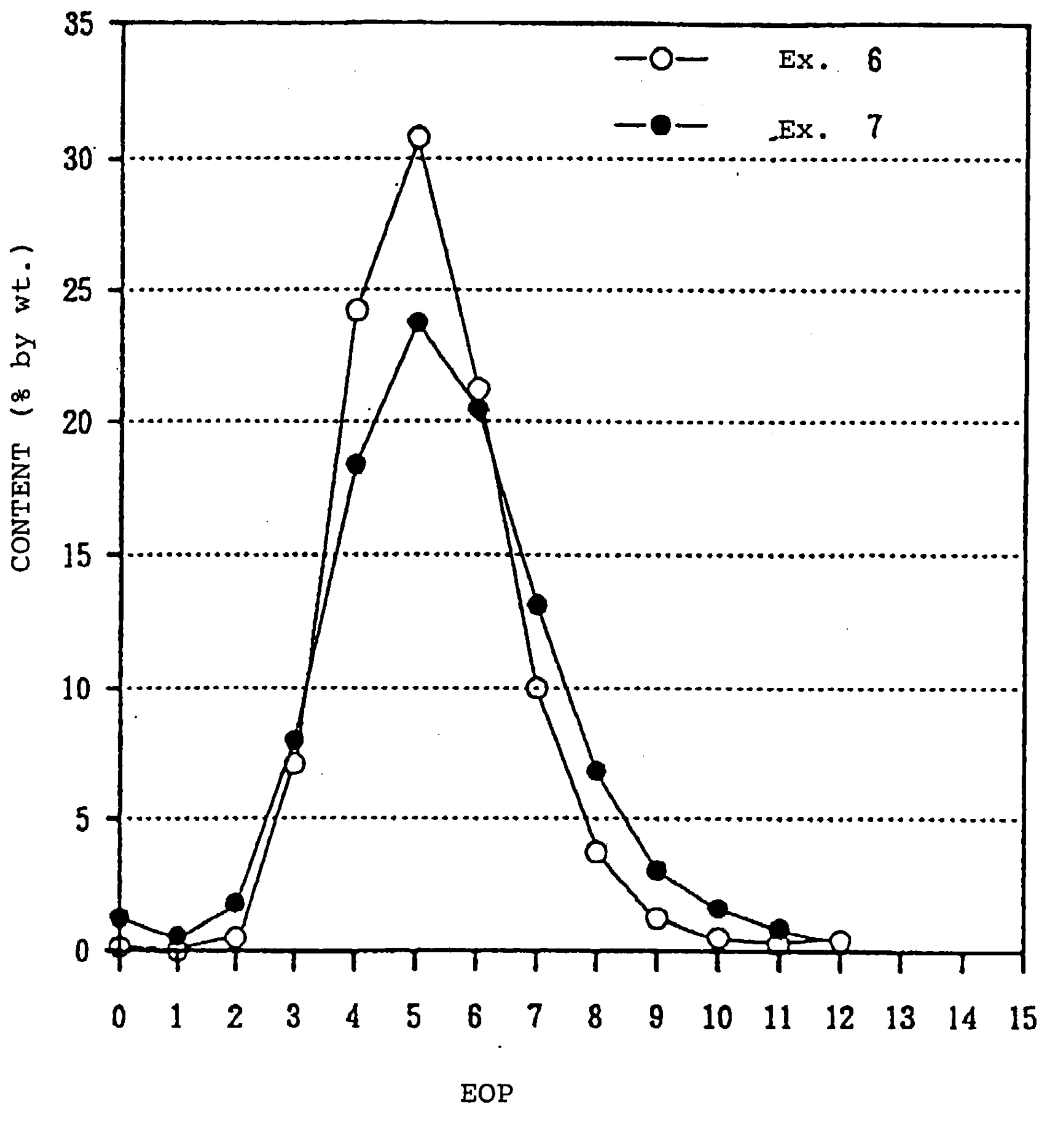
35
30
25
20
15
10
5
0
CONTENT (% by wt.)
Ex. 6
Ex. 7
0 1 2 3 4 5 6 7 8 9 10 11 12 13 14 15
EOP

Fig. 4

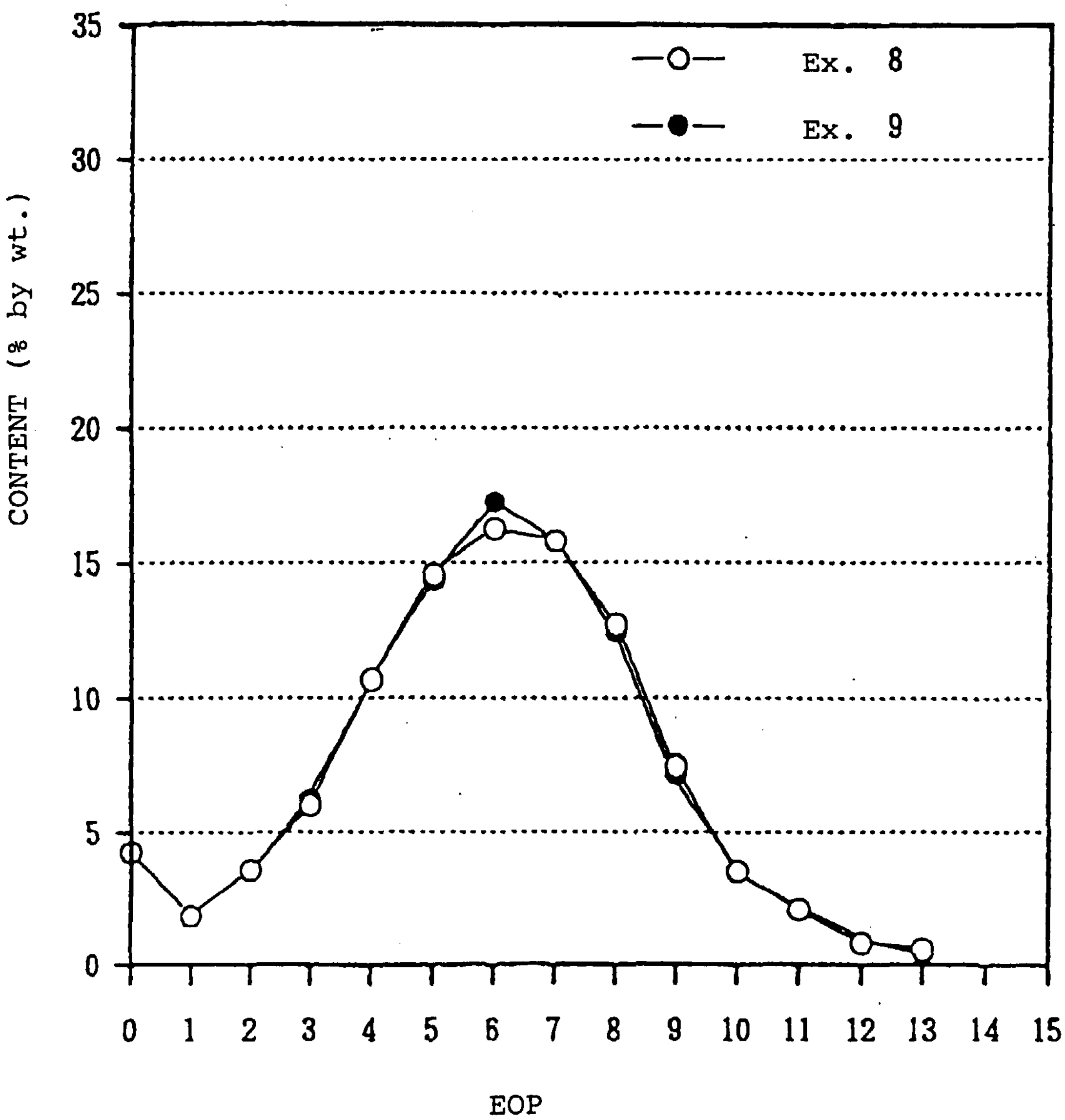
Ex. 8
Ex. 9
35
30
25
20
15
10
5
0
CONTENT (% by wt.)
0 1 2 3 4 5 6 7 8 9 10 11 12 13 14 15
EOP

Fig. 5

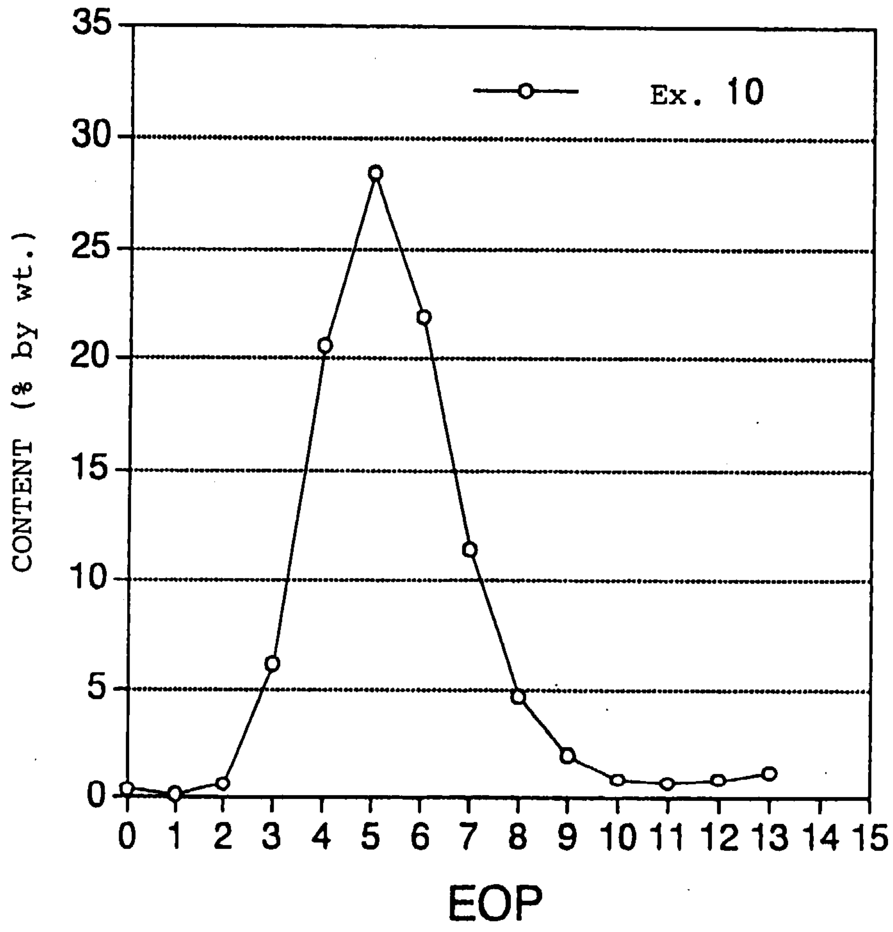
35
30
25
20
15
10
5
0
CONTENT (% by wt.)
Ex. 10
0 1 2 3 4 5 6 7 8 9 10 11 12 13 14 15
EOP

Fig. 6

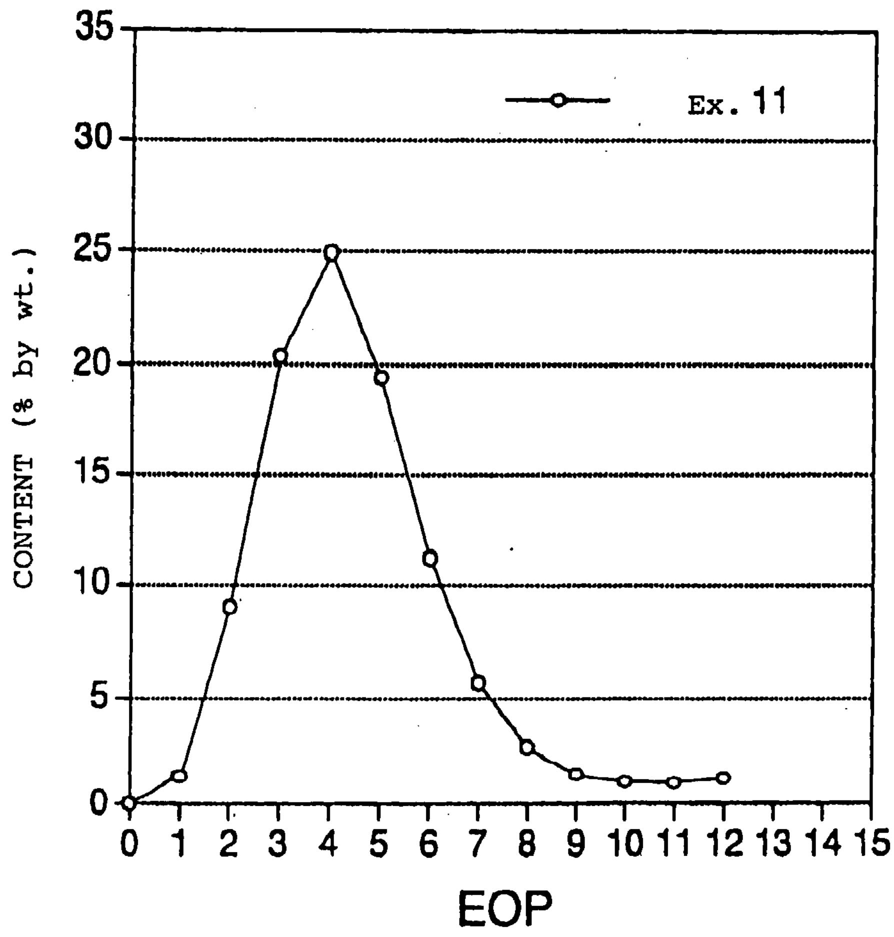
35
30
25
20
15
10
5
0
CONTENT (% by wt.)
Ex. 11
0 1 2 3 4 5 6 7 8 9 10 11 12 13 14 15
EOP

Fig. 7

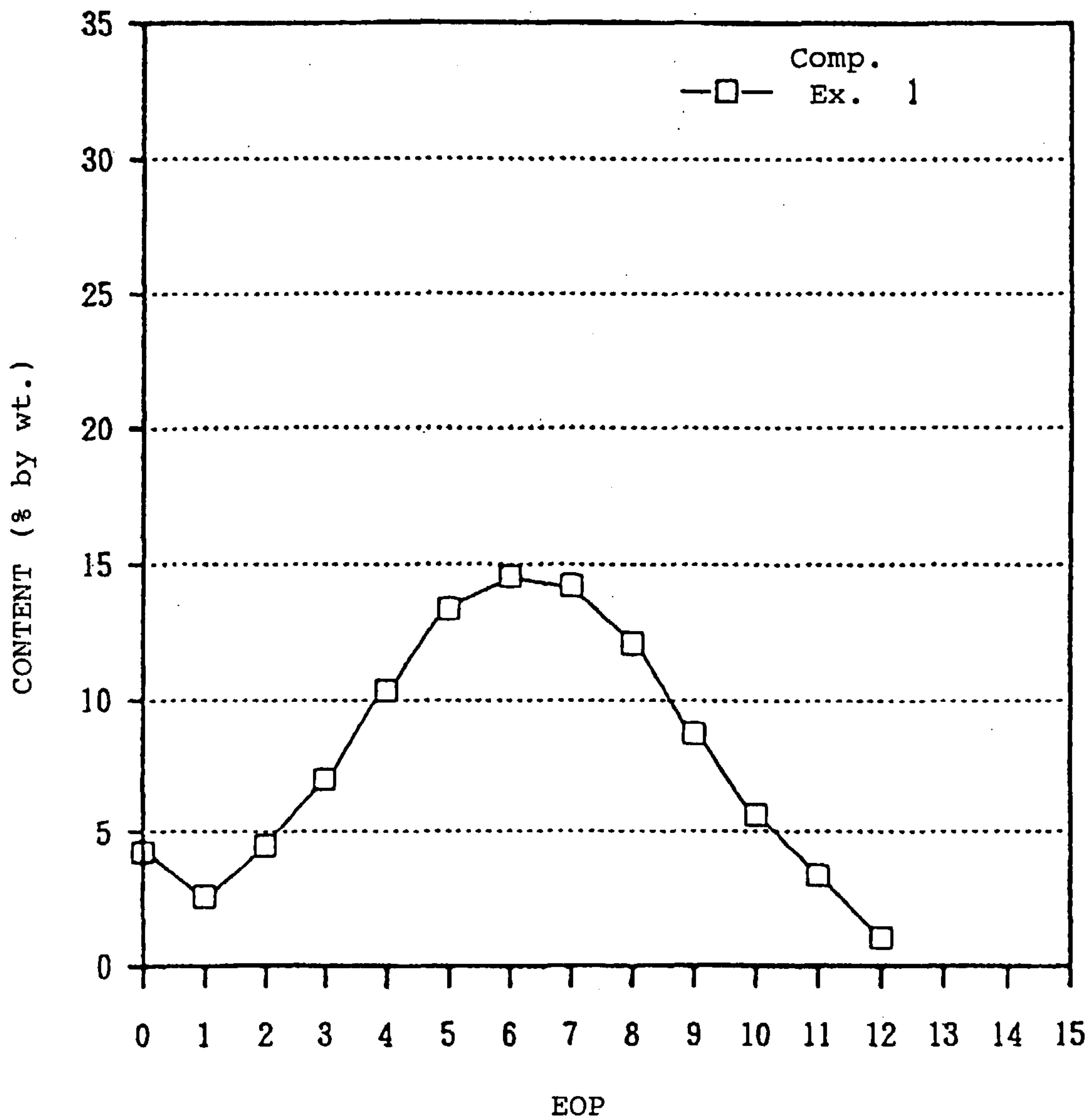
35
30
25
20
15
10
5
0
CONTENT (% by wt.)
Comp. Ex. 1
0 1 2 3 4 5 6 7 8 9 10 11 12 13 14 15
EOP

European Patent Office

# EUROPEAN SEARCH REPORT

Application Number
EP 96 12 0259

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | WO 92 07795 A (HENKEL KGAA) 14 May 1992 * claims 1,11; figures 1-3 * --- | 11 | C08G65/26 B01J21/06 |
| X | WO 94 05719 A (SHINWHA ENGINEERING & CONSTRUC ;MUELLER MONIKA (DE)) 17 March 1994 * example 1 * --- | 11 | |
| A | JOURNAL AMER. OIL CHEM. SOC. , vol. 72, no. 7, July 1995, pages 781-784, XP002029088 HAMA I. ET AL: "Preparation and pproperties of ethoxylated fatty methyl ester nonionics" * Whole document * --- | 1-12 | |
| A | DE 44 46 064 A (LION CORP) 29 June 1995 * claim 1; figures 1-4 * --- | 1-12 | |
| A | US 3 370 056 A (YOTSUZUKA MASARU ET AL) 20 February 1968 * example 5 * --- | 1-12 | TECHNICAL FIELDS SEARCHED (Int.Cl.6) |
| A,D | EP 0 335 295 A (HOECHST AG) 4 October 1989 * example 1 * ----- | 1-12 | C08G B01J |

The present search report has been drawn up for all claims

| Place of search | Date of completion of the search | Examiner |
|---|---|---|
| THE HAGUE | 8 April 1997 | O'Sullivan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)